# EUROPÄISCHE PATENTSCHRIFT

(11) **EP 1 933 051 B1**
(45) Veröffentlichungstag und Bekanntmachung des Hinweises auf die Patenterteilung: **06.07.2011**
(21) Anmeldenummer: 07023432.3
(22) Anmeldetag: 04.12.2007
(51) Int. Cl.: F16D 13/58

(54) **Kupplungsvorrichtung**
Coupling device
Dispositif d'embrayage

(30) Priorität: 16.12.2006 DE 102006059596; 08.11.2007 DE 102007053161
(43) Veröffentlichungstag der Anmeldung: 18.06.2008
(73) Patentinhaber: ZF Friedrichshafen AG, 88038 Friedrichshafen (DE)
(72) Erfinder: Ziegler, Erwin, 97535 Wasserlosen (DE); Hirschmann, Frank, 94121 Salzweg (DE)

(56) Entgegenhaltungen:
- EP-A- 0 114 098
- DE-A1- 3 441 507
- DE-B1- 1 775 889
- US-A- 4 618 047

## Beschreibung

Die Erfindung betrifft eine Kupplungsvorrichtung gemäß dem Oberbegriff von Patentanspruch 1.

In gedrückt betätigten Druckplatten insbesondere von Kraftfahrzeug-Reibungskupplungen stellt sich bei Vorrichtungen der oben genannten Art über die Gebrauchsdauer der Kupplung ein Verschleiß der Membranfederauflagen ein. Durch diesen Verschleiß wird der Abhub der Anpressplatte verringert. Wird der zu erwartende Verschleiß bei der Auslegung der Kupplung vorgehalten, ist der Abhub der neuen Kupplung um den Verschleiß größer als eigentlich benötigt. Dadurch ergibt sich eine ungünstige Übersetzung und ein schlechter Wirkungsgrad mit entsprechend großer Ausrückkraft.

Daher ist es bekannt geworden, den Auflagenverschleiß durch vorgespannte elastische Elemente in Form von Tellerfedern auszugleichen. Bei Druckplatten mit Haltering wird die Tellerfeder oberhalb des Gehäuses unter die Laschen des Halterings eingelegt. Bei der Montage wird die Tellerfeder vorgespannt. Kommt es zu einem Verschleiß, entspannt sich die Tellerfeder um einen entsprechenden Betrag und gleicht so den Verschleiß aus.

Die DE 26 13 048 C2 sieht eine im Radialschnitt V-förmig ausgebildete Feder vor, die sich an einem radial verlaufenden Abschnitt des Halterings abstützt und die Membranfeder gegen das Kupplungsgehäuse drückt. Aus der DE 30 22 595 A1 ist eine ähnliche Lösung bekannt. Das Federelement ist hier als Ring ausgeführt; der zwei Schenkel aufweist, von denen einer sich wieder an einem radial verlaufenden Abschnitt des Halterings abstützt und der andere die Membranfeder gegen das Gehäuse drückt.

In beiden Fällen ist das Federelement relativ aufwändig ausgestaltet, damit es in der richtigen Umfangslage zu liegen kommt. Bei der DE 30 22 595 A1 sind hierzu nasenartige Einprägungen in das Federelement eingebracht, in die die zungenartigen Vorsprünge des Halteelements eingreifen müssen. Eine solche Lösung zeigt auch die DE 30 23 841 A1. Dort wird alternativ auch vorgesehen, dass in das Federelement fensterartige Ausstanzungen eingearbeitet werden, um für die richtige Position, in Umfangsrichtung betrachtet, zu sorgen.

Bei der GB 1 511 745 wird bereits das Halteelement selber so ausgeführt, dass es eine tellerfederartige Eigenschaft aufweist. Damit kann in analoger Weise Verschleiß ausgeglichen werden.

Bei der DE 40 10 335 C2 und bei der GB 961 405 werden zwischen der Membranfeder und dem Gehäuse bzw. dem Haltering Drahtringe eingelegt. Diese haben jedoch dort keine verschleißausgleichende Funktion, sondern dienen als Lagerstellen für die Membranfeder. Sie werden dort auch treffend als Gelenklagerringe bzw. als "fulcrum ring" bezeichnet.

Nachteilig ist bei den vorbekannten Lösungen, dass die Herstellung der Spielausgleichsfunktion relativ aufwändig ist. Die Herstellung der vorbekannten Tellerfedern ist sehr aufwändig, insbesondere wenn dafür Sorge getragen werden soll, dass sie in der genau gewünschten Umfangslage zu liegen kommen. Auch die Montagekosten sind relativ hoch, da die gefertigte Tellerfeder bei der Montage präzise gehandhabt werden muss, um in die richtige Montageendlage zu gelangen.

Die genannten Probleme stellen sich insbesondere dann ein, wenn die Segmente der Membranfeder aus Steifigkeitsgründen mit Sicken versehen sind. Dann ist die Verwendung bekannter Federelemente besonders problematisch bzw. unmöglich.

Die US 4 618 047 betrifft eine Reibungskupplung, die einen Lagerring an einem Befestigungsniet für eine Membranfeder offenbart. Der Lagerring weist zwei Gruppen von Abschnitten auf, die axial zueinander versetzt ausgeführt sind.

Der Erfindung liegt daher die Aufgabe zugrunde, eine Kupplungsvorrichtung der eingangs genannten Art so fortzubilden, dass es möglich ist, die benötigte Verschleißausgleichsfunktion einfacher und kostengünstiger bereitzustellen. Dies gilt sowohl für die Herstellung der hierfür benötigten Bauteile als auch für den Montagevorgang. Dabei soll es insbesondere möglich sein, auch eine mit Versteifungsmitteln und damit einher gehenden Unebenheiten versehene Membranfeder einzusetzen.

Die Lösung dieser Aufgabe durch die Erfindung ist dadurch gekennzeichnet, dass das Federelement zwei Gruppen von Abschnitten aufweist, die alternierend angeordnet sind und die relativ zueinander axial (a) versetzt (x) angeordnet sind, und dass die dem Federelement zugewandte Fläche der Membranfeder uneben ausgebildet ist; wobei das Federelement im Bereich der Unebenheiten der Membranfeder mindestens einen weiteren Abschnitt mit einer der Form der Unebenheiten angepassten Form aufweist und sich zwischen einem Abschnitt der ersten Gruppe und einem Abschnitt der zweiten Gruppe jeweils ein Abschnitt der angepassten Form befindet.

Die genannten Unebenheiten der Membranfeder sind vorzugsweise Einprägungen oder Sicken, die der Versteifung der Membranfeder dienen. Die Einprägungen oder Sicken sind weiterhin bevorzugt in einen im wesentlichen ebenen Abschnitt der Membranfeder (d. h. bevorzugt in einen ebenen Blechabschnitt) eingebracht. Ferner kann vorgesehen sein, dass die Einprägungen oder Sicken stegförmig ausgebildet sind. Dabei erstrecken sich die stegförmigen Einprägungen oder Sicken besonders bevorzugt in radiale Richtung.

Der genannte dritte Abschnitt der angepassten Form ist bevorzugt als Bogen ausgebildet, insbesondere als Kreisbogen.

Eine besonders vorteilhafte, weil kostengünstige Fertigung wird ermöglicht, wenn das Federelement in der Vorderansicht ringförmig ausgebildet ist und das Federelement aus einem ringförmigen Draht besteht, wobei die einzelnen Abschnitte durch Biegungen des Drahts ausgebildet sind. Der Federdraht ist dabei bevorzugt im Querschnitt kreisförmig ausgebildet.

Das Halteelement ist gemäß einer bevorzugten Ausgestaltung als Distanzbolzen ausgebildet, der im Kupplungsgehäuse befestigt, insbesondere festgeschraubt, ist.

Mit dieser Ausgestaltung wird es möglich, in sehr ökonomischer Weise das Federelement herzustellen, wobei dennoch ein guter Federeffekt und damit ein guter Ausgleich von Verschleiß ermöglicht wird. Ferner gestaltet sich die Montage des Federelements - wie noch zu sehen sein wird - sehr einfach.

Die Membranfeder weist meistens eine Anzahl Federsegmente auf.

In der Zeichnung ist ein Ausführungsbeispiel der Erfindung dargestellt. Es zeigen:
- Fig. 1: eine Reibungskupplung im Radialschnitt,
- Fig. 2: das Federelement zur axialen Vorspannung der Auflage der Membranfeder in der Vorderansicht und
- Fig. 3: das Federelement gemäß Fig. 2 in der Seitenansicht.

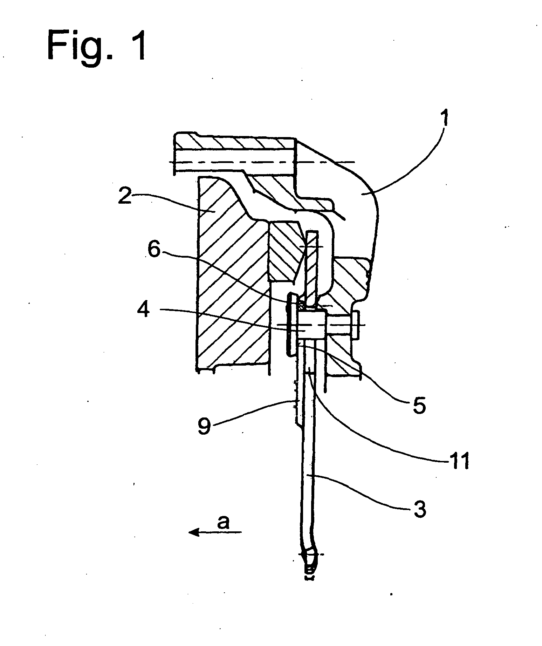

In Fig. 1 ist der Radialschnitt durch eine Kraftfahrzeug-Reibungskupplung zu sehen, die ein Kupplungsgehäuse 1 aufweist, in dem eine Membranfeder 3 gelagert ist. Durch deren axiale Verschiebung im radial inneren Bereich wird eine Anpressplatte 2 gegen eine nicht dargestellte Kupplungsscheibe gedrückt, die wiederum dann gegen ein Motor-Schwungrad drückt.

Für die Halterung der Membranfeder 3 im Kupplungsgehäuse 1 ist ein Halteelement 4 vorgesehen. Dieses besteht hier aus einem Distanzbolzen, der mit seinem einen axialen Ende in das Kupplungsgehäuse 1 eingeschraubt ist. Das andere Ende ragt in axiale Richtung a in Richtung Anpressplatte 2. In dem der Anpressplatte 2 zugewandten Endbereich ist der Distanzbolzen 4 tellerförmig verbreitert, so dass sich hier ein axialer Anschlag 5 bildet.

Der Distanzbolzen 4 durchsetzt dabei die Membranfeder 3, wofür Öffnungen 11 in der Membranfeder 3 vorgesehen sind.

Damit auch bei Verschleiß der Membranfederauflage keine Verringerung des Abhubs der Kupplung bei deren Lüften stattfindet, ist ein Federelement 6 zwischen den axialen Anschlag 5 und die Membranfeder 3 eingebracht.

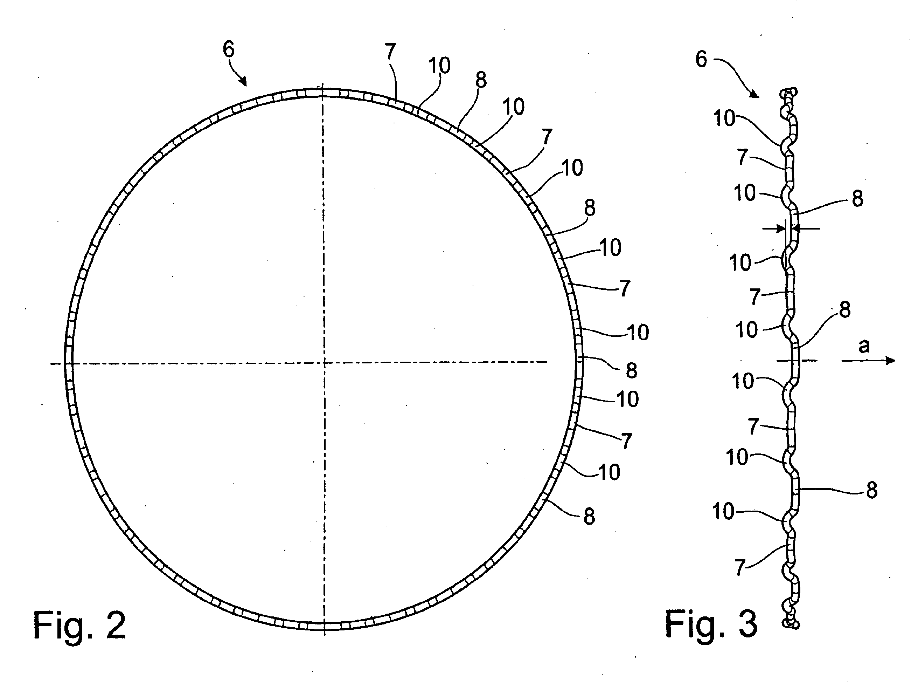

Details zum Aufbau des Federelements 6 sind aus den Figuren 2 und 3 ersichtlich. Das Federelement 6 besteht aus einem Drahtring, wobei der Draht einen kreisförmigen Querschnitt aufweist. Der Draht ist dabei so gebogen, dass sich zwei Gruppen von Abschnitten 7 und 8 bilden, die über dem Umfang des Federelements 6 alternierend angeordnet sind, sich also abwechseln. Beide Abschnitte 7, 8 liegen dabei bevorzugt, aber nicht zwingend, auf demselben Radius, wie es aus Fig. 2 hervorgeht.

Während die Abschnitte 8 im Ausführungsbeispiel an der Membranfeder 3 bzw. deren Segmenten anliegen, kontaktieren die Abschnitte 7 den axialen Anschlag 5 der Distanzbolzen 4.

Um den Verschleißausgleich bewerkstelligen zu können, muss das Federelement 6 eine Vorspannkraft in axiale Richtung a erzeugen können. Aus der Darstellung gemäß Fig. 3 ist ersichtlich, wie dies erfolgt. Hier ist zu sehen, dass die Abschnitte 7 gegenüber den Abschnitten 8 axial um einen Betrag x (Federweg) versetzt angeordnet sind. Um diesen Federweg x lässt sich also das Federelement 6 bei der Montage axial zusammendrücken. Bei Verschleiß entspannt sich das Federelement 6 entsprechend und gleicht durch eine Verschiebung in axiale Richtung a den Verschleiß aus.

Damit die einzelnen segmentartig über den Umfang angeordneten Abschnitte der Membranfeder 3 eine hinreichende Steifigkeit aufweisen, sind sie mit einer Unebenheit 9 versehen, im Ausführungsbeispiel nämlich mit einer Sicke. Diese erstreckt sich stegförmig in radiale Richtung, wie es aus Fig. 1 gesehen werden kann. Die Sicke stellt für das Federelement 6 eine Störung dar, so dass dieses ohne weitere Vorkehrungen nicht vernünftig arbeiten könnte. Um dem zu begegnen, ist - wie es am besten aus Fig. 3 hervorgeht - vorgesehen, dass dritte Abschnitte 10 im Federelement 6 ausgebildet sind, deren Form derjenigen der Sicke angepasst ist. Die dritten Abschnitte 10 sind also quasi um die Unebenheit (Sicke) 9 der Membranfeder 3 herum gebogen.

Damit ist es in einfacher Weise möglich, die Montage des Federelements 6 vorzunehmen: Der Federring ist so ausgestaltet, dass es quasi nur in einer (sich periodisch wiederholenden) Umfangslage zwischen den axialen Anschlägen 5 der Distanzbolzen 4 (von denen über den Umfang des Kupplungsgehäuses eine Anzahl vorgesehen ist) und der Membranfeder 3 platziert werden kann. Er ist sozusagen als komplementäres Gegenstück zu der Oberflächentopographie ausgebildet, die durch die Oberfläche der Membranfeder 3 definiert ist.

Der Montagevorgang wird entsprechend einfach. Das Federelement 6 wird dabei mit Vorspannung montiert.

Im Ausführungsbeispiel ist das Halteelement als Distanzbolzen ausgebildet. Es ist jedoch genauso auch möglich, das Erfindungskonzept einzusetzen, wenn zur Halterung der Membranfeder ein anders geartetes Halteelement eingesetzt wird.

### Bezugszeichenliste

- 1: Kupplungsgehäuse
- 2: Anpressplatte
- 3: Membranfeder
- 4: Halteelement (Distanzbolzen)
- 5: axialer Anschlag
- 6: Federelement
- 7: Abschnitt
- 8: Abschnitt
- 9: Unebenheiten der Membranfeder
- 10: Abschnitt
- 11: Öffnung

- a: axiale Richtung
- x: Federweg

## Patentansprüche

1. Kupplungsvorrichtung, insbesondere Kraftfahrzeug-Reibungskupplung, die ein Kupplungsgehäuse (1) aufweist, in dem eine auf eine Anpressplatte. (2) wirkende Membranfeder (3) gelagert ist, wobei die Membranfeder (3) am Kupplungsgehäuse (1) von mindestens einem Halteelement (4) gehalten wird und wobei zwischen einem axialen Anschlag (5) des Halteelements (4) und der Membranfeder (3) ein Federelement (6) angeordnet ist, das zwischen den beiden Bauteilen eine axiale Kraft ausüben kann wobei,
das Federelement (6) zwei Gruppen von Abschnitten (7, 8) aufweist, die alternierend angeordnet sind und die relativ zueinander axial (a) versetzt (x) angeordnet sind, und dass die dem Federelement (6) zugewandte Fläche der Membranfeder (3) uneben ausgebildet ist, wobei das Federelement (6) im Bereich der Unebenheiten (9) der Membranfeder (3) mindestens einen weiteren Abschnitt (10) mit einer der Form der Unebenheiten (9) angepassten Form aufweist, **dadurch gekennzeichnet, dass** sich zwischen einem Abschnitt (7) der ersten Gruppe und einem Abschnitt (8) der zweiten Gruppe jeweils ein Abschnitt (10) der angepassten Form befindet.

2. Kupplungsvorrichtung nach Anspruch 1, **dadurch gekennzeichnet, dass** die Unebenheiten (9) der Membranfeder (3) Einprägungen oder Sicken sind.

3. Kupplungsvorrichtung nach Anspruch 2, **dadurch gekennzeichnet, dass** die Einprägungen oder Sicken in einen im wesentlichen ebenen Abschnitt der Membranfeder (3) eingebracht sind.

4. Kupplungsvorrichtung nach Anspruch 2 oder 3, **dadurch gekennzeichnet, dass** die Einprägungen oder Sicken stegförmig ausgebildet sind.

5. Kupplungsvorrichtung nach Anspruch 4, **dadurch gekennzeichnet, dass** sich die stegförmigen Einprägungen oder Sicken in radiale Richtung erstrecken.

6. Kupplungsvorrichtung nach einem der Ansprüche 1 bis 5, **dadurch gekennzeichnet, dass** der Abschnitt (10) der angepassten Form als Bogen ausgebildet ist.

7. Kupplungsvorrichtung nach Anspruch 6, **dadurch gekennzeichnet, dass** der Bogen ein Kreisbogen ist.

8. Kupplungsvorrichtung nach einem der Ansprüche 1 bis 7, **dadurch gekennzeichnet, dass** das Federelement (6) in der Vorderansicht ringförmig ausgebildet ist.

9. Kupplungsvorrichtung nach einem der Ansprüche 1 bis 8, **dadurch gekennzeichnet, dass** das Federelement (6) aus einem ringförmigen Draht besteht, wobei die Abschnitte (7, 8, 10) durch Biegungen des Drahts ausgebildet sind.

10. Kupplungsvorrichtung nach Anspruch 9, **dadurch gekennzeichnet, dass** der Draht des Federelements (6) im Querschnitt kreisförmig ausgebildet ist.

11. Kupplungsvorrichtung nach einem der Ansprüche 1 bis 10, **dadurch gekennzeichnet, dass** das Halteelement (4) als Distanzbolzen ausgebildet ist, der im Kupplungsgehäuse (1) befestigt ist.

12. Kupplungsvorrichtung nach einem der Ansprüche 1 bis 11, **dadurch gekennzeichnet, dass** die Membranfeder (3) eine Anzahl Federsegmente aufweist.

13. Kupplungsvorrichtung nach einem der Ansprüche 1 bis 12, **dadurch gekennzeichnet, dass** die Abschnitte (8) der zweiten Gruppe an der Membranfeder (3) oder deren Segmenten anliegen und die Abschnitte (7) der ersten Gruppe den axialen Anschlag (5) kontaktieren.

14. Kupplungsvorrichtung nach einem der Ansprüche 1 bis 13, **dadurch gekennzeichnet, dass** die Abschnitte (7; 8) der ersten und der zweiten Gruppe auf demselben Radius liegen.

## Claims

1. Clutch device, in particular motor vehicle friction clutch, which has a clutch housing (1) in which is mounted a diaphragm spring (3) which acts on a pressure plate (2), the diaphragm spring (3) being held on the clutch housing (1) by at least one holding element (4), and a spring element (6) being arranged between an axial stop (5) of the holding element (4) and the diaphragm spring (3), which spring element can exert an axial force between the two components, the spring element (6) having two groups of sections (7, 8) which are arranged in an alternating fashion and which are arranged axially (a) offset (x) relative to one another, and that surface of the diaphragm spring (3) which faces towards the spring element (6) being of uneven design, the spring element (6) having at least one further section (10) in the region of the unevennesses (9) of the diaphragm spring (3), said at least one further section having a shape matched to the shape of the unevennesses (9), **characterized in that** in each case one section (10) having the matched shape is situated between a section (7) of the first group and a section (8) of the second group.

2. Clutch device according to Claim 1, **characterized in that** the unevennesses (9) of the diaphragm spring (3) are indentations or beads.

3. Clutch device according to Claim 2, **characterized in that** the indentations or beads are formed into a substantially planar section of the diaphragm spring (3).

4. Clutch device according to Claim 2 or 3, **characterized in that** the indentations or beads are formed in the manner of ridges.

5. Clutch device according to Claim 4, **characterized in that** the ridge-like indentations or beads extend in the radial direction.

6. Clutch device according to one of Claims 1 to 5, **characterized in that** the section (10) having the matched shape is formed as an arc.

7. Clutch device according to Claim 6, **characterized in that** the arc is a circular arc.

8. Clutch device according to one of Claims 1 to 7, **characterized in that** the spring element (6) is of annular design when viewed from the front.

9. Clutch device according to one of Claims 1 to 8, **characterized in that** the spring element (6) is composed of an annular wire, the sections (7, 8, 10) being formed by bends in the wire.

10. Clutch device according to Claim 9, **characterized in that** the wire of the spring element (6) is of circular cross section.

11. Clutch device according to one of Claims 1 to 10, **characterized in that** the holding element (4) is formed as a spacer bolt which is fastened in the clutch housing (1).

12. Clutch device according to one of Claims 1 to 11, **characterized in that** the diaphragm spring (3) has a number of spring segments.

13. Clutch device according to one of Claims 1 to 12, **characterized in that** the sections (8) of the second group bear against the diaphragm spring (3) or the segments thereof, and the sections (7) of the first group make contact with the axial stop (5).

14. Clutch device according to one of Claims 1 to 13, **characterized in that** the sections (7; 8) of the first and second groups are situated at the same radius.

## Revendications

1. Dispositif d'embrayage, en particulier embrayage à friction d'un véhicule automobile, qui présente un boîtier d'embrayage (1) dans lequel est monté un ressort à membrane (3) agissant sur un plateau de pressage (2), le ressort à membrane (3) étant maintenu sur le boîtier d'embrayage (1) par au moins un élément de retenue (4) et un élément de ressort (6) étant disposé entre une butée axiale (5) de l'élément de retenue (4) et le ressort à membrane (3), lequel élément de ressort (6) peut exercer une force axiale entre les deux composants,
l'élément de ressort (6) présentant deux groupes de portions (7, 8) qui sont disposées en alternance et qui sont disposées de manière décalée (x) axialement (a) les unes par rapport aux autres, et la surface du ressort à membrane (3) tournée vers l'élément de ressort (6) étant réalisée de manière inégale, l'élément de ressort (6) présentant dans la région des inégalités (9) du ressort à membrane (3) au moins une portion supplémentaire (10) de forme adaptée à la forme des inégalités (9), **caractérisé en ce qu'**une portion (10) de forme adaptée se trouve à chaque fois entre une portion (7) du premier groupe et une portion (8) du deuxième groupe.

2. Dispositif d'embrayage selon la revendication 1, **caractérisé en ce que** les inégalités (9) du ressort à membrane (3) sont des gaufrages ou des moulures.

3. Dispositif d'embrayage selon la revendication 2, **caractérisé en ce que** les gaufrages ou les moulures sont pratiqués dans une portion du ressort à membrane (3) essentiellement plane.

4. Dispositif d'embrayage selon la revendication 2 ou 3, **caractérisé en ce que** les gaufrages ou les moulures sont réalisés sous forme de nervures.

5. Dispositif d'embrayage selon la revendication 4, **caractérisé en ce que** les gaufrages ou les moulures en forme de nervures s'étendent dans la direction radiale.

6. Dispositif d'embrayage selon l'une quelconque des revendications 1 à 5, **caractérisé en ce que** la portion (10) de forme adaptée est réalisée sous forme d'arc.

7. Dispositif d'embrayage selon la revendication 6, **caractérisé en ce que** l'arc est un arc de cercle.

8. Dispositif d'embrayage selon l'une quelconque des revendications 1 à 7, **caractérisé en ce que** l'élément de ressort (6) est réalisé sous forme annulaire en vue de face.

9. Dispositif d'embrayage selon l'une quelconque des revendications 1 à 8, **caractérisé en ce que** l'élément de ressort (6) se compose d'un fil métallique annulaire, les portions (7, 8, 10) étant réalisées par flexion du fil métallique.

10. Dispositif d'embrayage selon la revendication 9, **caractérisé en ce que** le fil métallique de l'élément de ressort (6) est réalisé avec une section transversale circulaire.

11. Dispositif d'embrayage selon l'une quelconque des revendications 1 à 10, **caractérisé en ce que** l'élément de retenue (4) est réalisé sous forme de boulon d'espacement qui est fixé dans le boîtier d'embrayage (1).

12. Dispositif d'embrayage selon l'une quelconque des revendications 1 à 11, **caractérisé en ce que** le ressort à membrane (3) présente une pluralité de segments de ressort.

13. Dispositif d'embrayage selon l'une quelconque des revendications 1 à 12, **caractérisé en ce que** les portions (8) du deuxième groupe s'appliquent contre le ressort à membrane (3) ou ses segments et les portions (7) du premier groupe viennent en contact avec la butée axiale (5).

14. Dispositif d'embrayage selon l'une quelconque des revendications 1 à 13, **caractérisé en ce que** les portions (7 ; 8) du premier et du deuxième groupe se situent sur le même rayon.
